# FASCICULE DE BREVET EUROPEEN

(11) **EP 2 633 210 B1**
(45) Date de publication et mention de la délivrance du brevet: **22.10.2014**
(21) Numéro de dépôt: 11773472.3
(22) Date de dépôt: 25.10.2011
(51) Int. Cl.: F16J 15/34

(54) **GARNITURE D'ETANCHEITE DISPOSEE ENTRE DEUX ELEMENTS OPPOSES ET AUTOUR D'UN AXE**
DICHTPACKUNG ZWISCHEN ZWEI GEGENÜBERLIEGENDEN ELEMENTEN UND UM EINE ACHSE
SEAL PACKING ARRANGED BETWEEN TWO OPPOSITE ELEMENTS AND AROUND AN AXIS

(30) Priorité: 27.10.2010 FR 1058824
(43) Date de publication de la demande: 04.09.2013
(73) Titulaire: Commissariat à l'Énergie Atomique et aux Énergies Alternatives, 75015 Paris (FR); Technetics Group France SAS, 42000 Saint-Etienne (FR)
(72) Inventeur: TOCHEPORT, Grégory, F-42100 Saint Etienne (FR); DARQUE, Jean-Jacques, F-31140 Launaguet (FR); LOMBARD, David, F-07000 ANNONAY (FR); GUIGNARD, Stéphane, F-42600 Montbrison (FR); GUIMET, Laurent, F-42240 Unieux (FR); ROUCHOUZE, Bruno, F-42650 Saint Jean De Bonnefonds (FR); JULIAA, Jean-François, F-26200 Montelimar (FR)
(74) Mandataire: Ilgart, Jean-Christophe
(86) Numéro de dépôt international: PCT/EP2011/068597
(87) Numéro de publication internationale: WO 2012/055841

(56) Documents cités:
- EP-A1- 0 065 646
- DE-A1- 3 212 939
- FR-A5- 2 239 159
- GB-A- 1 142 329
- US-A- 3 642 291

## Description

Le sujet de l'invention est une garniture d'étanchéité disposée entre deux éléments opposés et autour d'un axe.

De telles garnitures comprennent deux blocs respectivement liés aux éléments opposés et en contact mutuel par des faces planes de glissement, ainsi qu'un moyen de compression disposé entre un des blocs et l'élément correspondant pour exercer et maintenir une pression de contact entre les faces planes qui maintient l'étanchéité. Les éléments opposés appartiennent généralement à un rotor et à un stator et les faces planes, soumises à un glissement mutuel, exercent alors une étanchéité dynamique. D'autres moyens d'étanchéité, qui ne font pas partie de l'invention, sont disposés entre les éléments et les blocs pour compléter l'étanchéité de façon statique.

On préfère de construire des blocs continus, s'étendant donc sur des anneaux complets, et de les enfiler successivement autour de l'axe ; mais cela est parfois impossible si les deux côtés de l'axe sont occupés par des pièces volumineuses, ou du moins gênant si ces pièces doivent être démontées pour permettre d'enfiler les blocs d'étanchéité.

C'est pourquoi on a conçu des blocs dont chacun est divisé en portions s'étendant sur des secteurs complémentaires de circonférence autour de l'axe, que l'on approche et assemble en les refermant sur l'axe. De tels éléments sont illustrés par exemple dans le document US-A-5 961 122 et sont appelés « sécables ». Le moyen de compression qui est alors appliqué classiquement est un réseau de ressorts parallèles à l'axe et répartis sur une circonférence. Son inconvénient est que la pression nécessaire à l'étanchéité peut devenir irrégulière à cause des inégalités des forces exercées par les ressorts, découlant des tolérances de fabrication, et donc des inégalités des forces résultantes reçues par chacun des éléments « sécables », qui ne se transmettent pas les efforts axiaux.

L'invention est relative à une garniture d'étanchéité du genre précité où le moyen de compression est amélioré de manière qu'il exerce un effort uniforme sur toute la circonférence sur laquelle il s'appuie même si elle est partagée entre des blocs sécables. Un aspect qu'il faut relever est que le moyen de compression peut aussi être monté autour de l'axe par un mouvement essentiellement radial, comme les blocs sécables, avec lesquels il partage l'avantage de ne pas nécessiter d'enfilage le long de l'axe.

Sous une forme générale, l'invention concerne une garniture d'étanchéité disposée entre deux éléments opposés et autour d'un axe s'étendant entre les deux éléments, la garniture comprenant deux blocs respectivement liés aux éléments et en contact mutuel par des faces planes de glissement, les blocs étant chacun divisés en portions s'étendant sur des secteurs complémentaires de circonférence autour de l'axe, et encore un moyen de compression disposé entre un des éléments et un des blocs et maintenant le contact des faces de glissement ; le moyen de compression est un joint gonflable logé dans une gorge dudit élément et comprenant une enveloppe souple comprenant deux extrémités fermées et adjacentes dans la gorge, ainsi qu'un orifice de gonflage. La combinaison de secteurs divisés en blocs et d'un joint unique puisque discontinu constitue l'originalité de l'invention : l'égalité de pression de tarage est respectée de même que la possibilité de démonter la garniture seulement, par des mouvements radiaux hors de l'axe, bien que le joint s'étende sur une circonférence entière. Il est à noter que l'art antérieur illustre des garnitures d'étanchéité à joints gonflables pour réaliser le tarage, mais qui sont continus (sans extrémités matérielles) alors que les blocs sont eux aussi continus : on peut citer FR-A-2 239 159, EP-A-0 065 646, DE-A-32 12 939 et GB-A-1142329.

Le joint est dégonflé et donc mou au montage, ce qui permet de le placer facilement dans la gorge en l'enroulant autour de l'axe et en assemblant ses extrémités, puis il est gonflé et transmet donc la compression nécessaire au bon fonctionnement de la garniture. La pression étant forcément uniforme dans l'enveloppe, des portions des blocs subissent un effort égal. La seule inégalité possible est à la jonction des extrémités de l'enveloppe, mais elle est presque imperceptible.

Selon des réalisations préférées, avantageusement l'enveloppe est tubulaire et les extrémités ont des faces planes et sont unies à des contours extrêmes de l'enveloppe. Les extrémités peuvent consister seulement en ces faces planes ou en des embouts munis de portions tubulaires qui prolongent le tube de l'enveloppe. La section de l'enveloppe est avantageusement prismatique quand elle est gonflée, les extrémités ayant une forme prismatique identique, et de préférence essentiellement rectangulaire. Une plus grande régularité de l'effort est alors obtenue, le joint étant parfaitement en appui dans la gorge sur trois faces et en appui sur le bloc par une quatrième face. Le contact est toutefois étanche, si l'enveloppe a une face d'appui sur le bloc qui est pourvue de dents parallèles et s'étendant d'une des extrémités à l'autre.

L'orifice comprend avantageusement une valve de remplissage qui maintient le joint à la pression voulue quand il a été empli. Cette valve peut être placée dans un conduit de cet élément donnant sur l'extérieur, ou dans un conduit débouchant dans un volume de fluide contenu par la garniture. Dans cette dernière conception, c'est le fluide même qui est retenu par la garniture qui gonfle le joint par sa pression. Dans une conception plus perfectionnée, le volume de fluide est divisé par une membrane souple en un volume principal donnant sur les faces de glissement et un volume annexe donnant sur le conduit : cela est préféré quand le fluide est polluant, corrosif ou chargé d'impuretés, pour éviter d'encrasser l'intérieur du joint ou de l'endommager d'une autre manière ; un fluide inoffensif est versé dans le volume annexe et emplit le joint, avec une pression qui lui est encore communiquée par le fluide principal à contenir.

Selon un autre perfectionnement, le joint peut contenir un élément de raidissage souple mais aux sections indéformables, qui limite son écrasement.

L'invention sera maintenant décrite dans ses divers aspects en liaison aux figures suivantes :
- la figure 1 illustre la garniture d'étanchéité,
- la figure 2 est un agrandissement montrant le joint,
- les figures 3, 4 et 5 illustrent des détails du joint,
- la figure 6 est une vue de face du joint,
- et la figure 7 est une variante de réalisation.

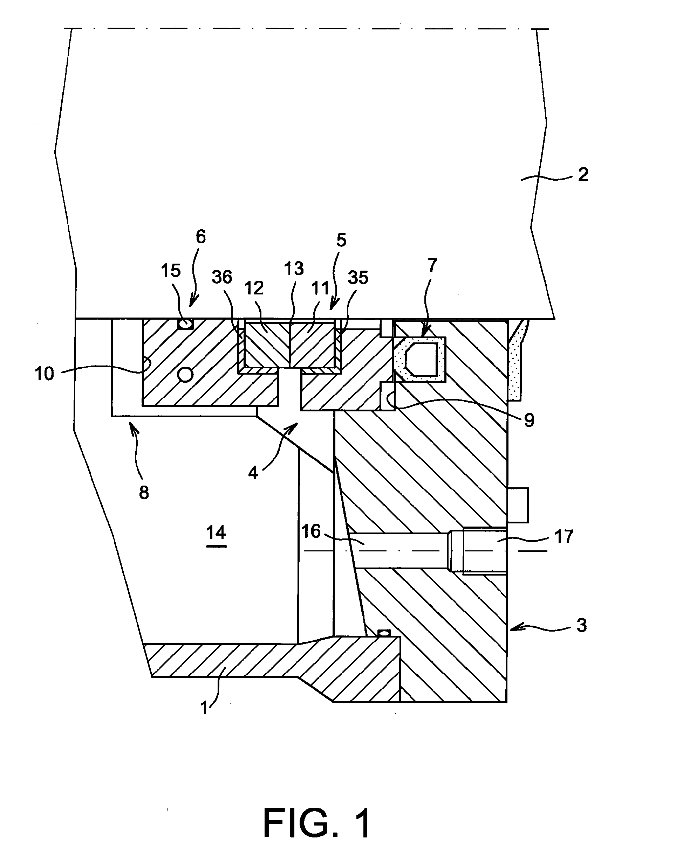

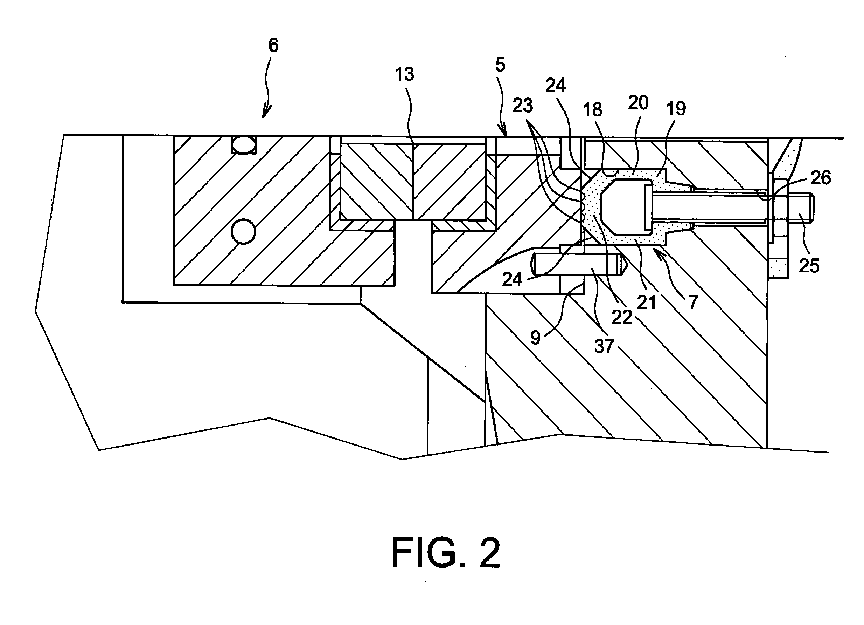

Une extrémité d'un bâti (1) de machine est représentée partiellement à la figure 1. Le bâti (1) entoure un arbre (2) de rotor, la machine étant circulaire autour d'un axe (X). Un boîtier (3) est assemblé à l'extrémité du bâti (1) de façon étanche et entoure l'arbre (2) avec un petit jeu. Une garniture d'étanchéité (4) comprend un bloc fixe (5), un bloc mobile (6) et un joint (7) qui constitue l'élément essentiel de l'invention. Les blocs (5 et 6) sont disposés dans des cavités annulaires du bâti (3) et d'une collerette (8) de l'arbre (2), qui possèdent des faces de fond opposées (9 et 10). Ils sont munis de pièces d'étanchéité dynamique appelées « grains », respectivement (11 et 12), qui leur sont solidaires et sont en contact mutuel par des faces de glissement (13). Le bloc du rotor (6) est en appui sur la face (10) de fond de la collerette (8), alors que le joint (7) exerce un appui sur le fond du bloc (5) du stator, le repoussant vers le bloc de rotor (6). La garniture (4) clôt le volume (14) délimité par le bâti (1), l'arbre (2) et le boîtier (3) ; l'étanchéité est assurée par le joint (7), le contact entre les faces de glissement (13) et un joint statique (15) disposé entre le bloc du rotor (6) et l'arbre (2). Un perçage (16) qui traverse le boîtier (3) est un orifice de dégazage clos par un filtre (17) approprié. La discussion porte maintenant sur le joint (7) en liaison aux figures 2, 3, 4 et 5.

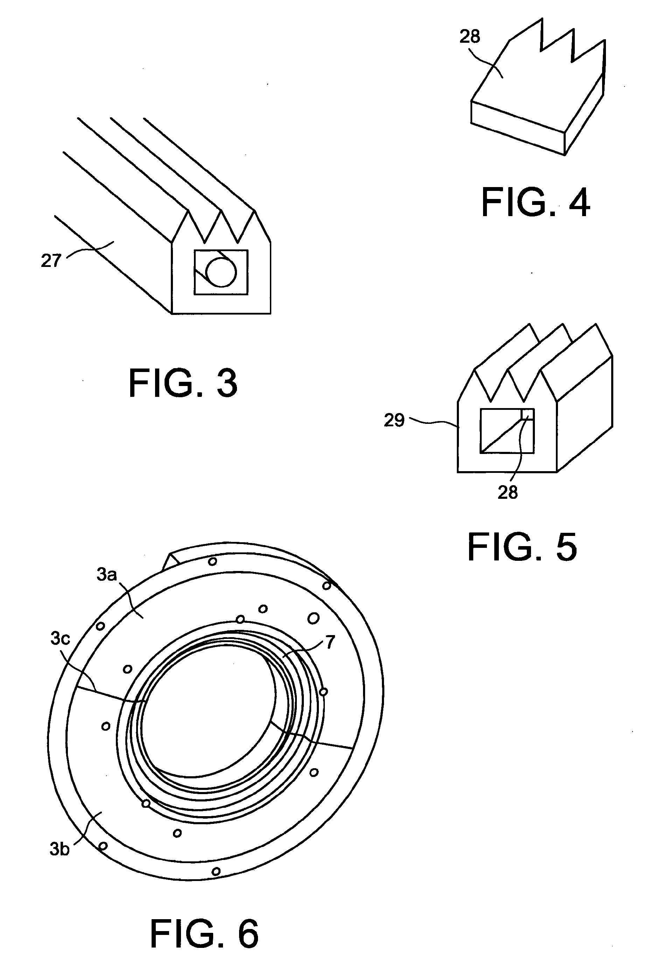

Il est logé dans une gorge (18) creusée dans la face de fond (9) du boîtier (3) tout en débordant un peu de cette gorge (18). Sa section est prismatique, essentiellement rectangulaire ici de manière à s'appuyer sur les parois de la gorge (18) par un côté de fond (19) et deux côtés latéraux (20 et 21), l'appui sur le bloc du stator (5) se faisant par le quatrième côté (22), qui est doté de cannelures et de dents (23) s'étendant dans la direction de circonférence du joint. Des chanfreins (24) peuvent exister entre le côté antérieur (22) et les côtés latéraux (20 et 21). Le joint (7) possède une valve (25) de gonflage qui, dans cette conception, traverse un conduit (26) creusé dans le boîtier (3) et s'étend jusqu'à l'extérieur de la machine. Le joint (7) est en élastomère, creux, et peut prendre un état dégonflé et mou où il est facile à introduire dans la gorge (18) et un état gonflé dans lequel il occupe complètement cette gorge et en déborde légèrement pour presser sur le bloc du stator (5). Le joint (7) est composé d'un tube (27) de section uniforme (référencé à la figure 3) et deux extrémités destinées à fermer ce tube, ces extrémités pouvant être des plaquettes (28) plates (figure 4) ou comporter encore un embout de prolongement du tube (29), de même section que lui, en plus de cette plaquette (28) plate (figure 5). Les extrémités ont la même section que le tube (27) et peuvent donc être parfaitement jointes à lui par vulcanisation. La longueur du tube (27) est telle que les extrémités sont adjacentes quand le joint (7) est placé dans la gorge (18). Le gonflage les appuie l'une contre l'autre de manière à rendre leur jonction étanche. Elles peuvent être construites en une matière plus souple que le tube (27) pour mieux garantir cette étanchéité par un contact continu. Les dents (23) s'étendent sur toute la longueur du joint (7), y compris aux extrémités.

La figure 6 montre que le boîtier (3) est sécable et composé de deux moitiés (3a et 3b) jointes l'une à l'autre par une ligne de joint (3c), tout comme les blocs (5 et 6), ainsi qu'on l'a mentionné. La jonction (30) des extrémités du joint (7) est choisie à distance de la ligne de joint (3c) pour ne pas compromettre l'étanchéité, ce qui n'est pas difficile puisque la valve (25) impose la position angulaire du joint (7) dans la gorge (18).

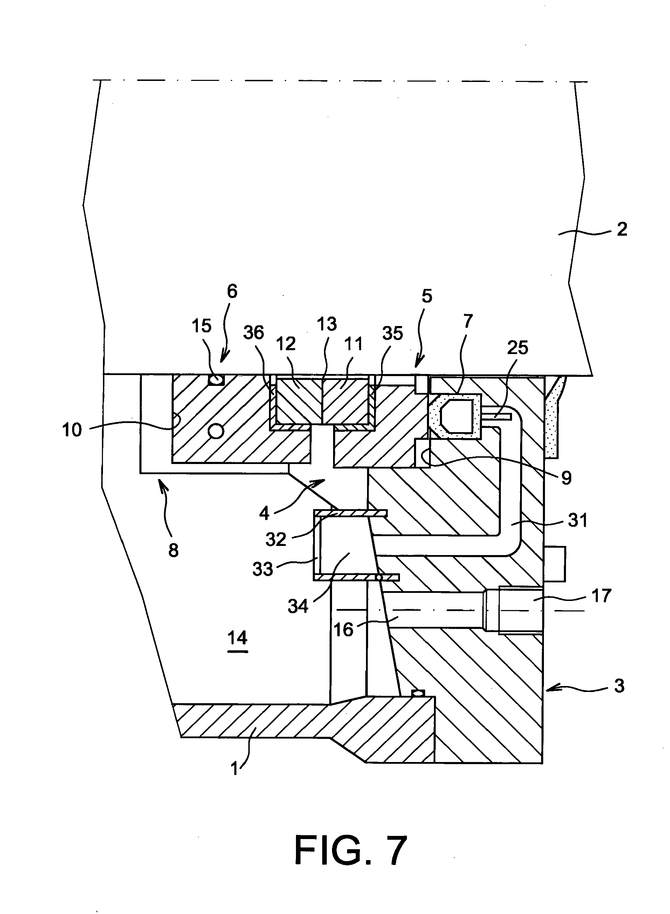

Une conception légèrement différente est représentée à la figure 7 : le conduit, ici (31), dans lequel s'étend la valve (25) débouche dans le volume (14) à clore par la garniture (4), ce qui fait que le fluide contenu dans ce volume assure lui-même le gonflage du joint (7) en entrant dans la valve (25). Le gonflage peut être soit direct, soit s'exercer par l'intermédiaire d'une poche de fluide (34) formée autour du débouché du conduit (31) et délimitée par le boîtier (3) et une cloche (32) comprenant une partie en membrane déformable (33), montée de façon étanche sur le boîtier (3) autour du débouché du conduit : c'est alors le fluide contenu dans la poche (34) qui emplit le conduit (31) et la chambre du joint (7) quand il est installé.

L'étanchéité entre les blocs (5 et 6) et les grains (11 et 12) est assurée par des bracelets élastiques (35 et 36) comprimés entre eux. Des goupilles (37) maintiennent le bloc du stator (5) sur le boîtier (3) avec un débattement angulaire réduit. D'autres goupilles, non représentées, relient le bloc du rotor (6) à la collerette (18). Un raidisseur (38) est placé dans le joint (7) pour limiter son écrasement, pendant des coups de bélier par exemple ; il est souple de façon à pouvoir être courbé avec le reste du joint (7), mais de section indéformable ou peu déformable.

## Revendications

1. Garniture d'étanchéité (4) disposée entre deux éléments (3, 8) opposés et autour d'un axe (2) s'étendant entre les deux éléments, la garniture comprenant deux blocs (5, 6) respectivement liés aux éléments et en contact mutuel par des faces planes de glissement (13), chacun divisés en portions s'étendant sur des secteurs complémentaires de circonférence autour de l'axe, et encore un moyen de compression disposé entre un des éléments et un des blocs et maintenant le contact des faces de glissement, **caractérisé en ce que** le moyen de compression est un joint gonflable (7) logé dans une gorge (18) dudit élément (3) et comprenant une enveloppe (27) souple ainsi qu'un orifice de gonflage, et l'enveloppe souple du joint comprend deux extrémités fermées et adjacentes dans la gorge.

2. Garniture d'étanchéité selon la revendication 1, **caractérisée en ce que** l'enveloppe (27) est tubulaire, et les extrémités ont des faces planes (28) et sont unies à des contours extrêmes de l'enveloppe.

3. Garniture d'étanchéité selon la revendication 2, **caractérisée en ce que** l'enveloppe a une section prismatique quand elle est gonflée, et les extrémités ont une forme prismatique identique.

4. Garniture d'étanchéité selon la revendication 3, **caractérisée en ce que** la section et la forme prismatique sont essentiellement rectangulaires.

5. Garniture d'étanchéité selon la revendication 3, **caractérisée en ce que** l'enveloppe a une face d'appui sur le bloc, qui est pourvue de dents parallèles (23) et s'étendant d'une des extrémités à l'autre.

6. Garniture d'étanchéité selon la revendication 1, **caractérisée en ce que** l'orifice comprend une valve (25) de remplissage.

7. Garniture d'étanchéité selon la revendication 6, **caractérisée en ce que** la valve donne dans un conduit (31) débouchant dans un volume de fluide (14) contenu par la garniture.

8. Garniture d'étanchéité selon la revendication 7, **caractérisée en ce que** le volume de fluide est divisé par une membrane souple (33) en un volume principal donnant sur les faces de glissement et un volume annexe donnant sur le conduit.

9. Garniture d'étanchéité selon la revendication 1, **caractérisée en ce que** le joint contient un raidisseur (38) souple.

10. Garniture d'étanchéité selon la revendication 6, **caractérisée en ce que** la valve donne sur un conduit (26) menant à une face extérieure de l'élément.

## Patentansprüche

1. Dichtungspackung (4), angeordnet zwischen zwei sich gegenüberstehenden Elementen (3, 8) und um eine Achse (2) herum, die sich zwischen den beiden Elementen erstreckt, wobei die Packung zwei jeweils mit den Elementen verbundene und durch plane Gleitflächen (13) in gegenseitigem Kontakt befindliche Blöcke (5, 6), jeder unterteilt in sich über komplementäre Umfangssektoren um die Achse herum erstreckende Teilstücke, und außerdem eine Druckeinrichtung umfasst, die zwischen einem der Elemente und einem der Blöcke angeordnet ist und den Kontakt der Gleitflächen aufrecht erhält,
**dadurch gekennzeichnet, dass** die Druckeinrichtung eine aufblasbare Dichtung (7) ist, die in einer Nut des genannten Elements (3) sitzt und eine elastische Hülle (27) sowie eine Aufblasöffnung umfasst, und die elastische Hülle der Dichtung dabei zwei geschlossene und in der Nut aneinandergrenzende Enden umfasst.

2. Dichtungspackung nach Anspruch 1, **dadurch gekennzeichnet, dass** die Hülle (27) röhrenförmig ist, und die Enden ebene Flächen (28) haben und an Endkonturen der Hülle verbunden sind.

3. Dichtungspackung nach Anspruch 2, **dadurch gekennzeichnet, dass** die Hülle einen prismatischen Querschnitt hat, wenn sie aufgeblasen ist, und die Enden eine identische prismatische Form haben.

4. Dichtungspackung nach Anspruch 3, **dadurch gekennzeichnet, dass** der Querschnitt und die prismatische Form im Wesentlichen rechteckig sind.

5. Dichtungspackung nach Anspruch 3, **dadurch gekennzeichnet, dass** die Hülle gegenüber dem Block eine Auflageseite hat, die parallele Zähne (23) aufweist und sich von einem der Enden zum anderen erstreckt.

6. Dichtungspackung nach Anspruch 1, **dadurch gekennzeichnet, dass** die Öffnung ein Füllventil (25) umfasst.

7. Dichtungspackung nach Anspruch 6, **dadurch gekennzeichnet, dass** das Ventil verbunden ist mit einer Leitung (31), die in einem in der Packung enthaltenen Fluidvolumen (14) mündet.

8. Dichtungspackung nach Anspruch 7, **dadurch gekennzeichnet, dass** das Fluidvolumen durch eine nachgiebige Membran (33) unterteilt ist in ein mit den Gleitflächen verbundenes Hauptvolumen und ein mit der Leitung verbundenes Nebenvolumen.

9. Dichtungspackung nach Anspruch 1, **dadurch gekennzeichnet, dass** die Dichtung eine nachgiebige Versteifung (38) umfasst.

10. Dichtungspackung nach Anspruch 6, **dadurch gekennzeichnet, dass** das Ventil mit einer Leitung (26) verbunden ist, die zu einer Außenseite des Elements führt.

## Claims

1. Gland packing (4) arranged between two opposite elements (3, 8) and around a shaft (2) extending between the two elements, the packing comprising two blocks (5, 6) respectively connected to the elements and in mutual contact through plane slip faces (13), each block being divided into portions extending around the shaft over complementary sectors of the circumference, and also a compression means arranged between one of the elements and one of the blocks and maintaining the slip faces in contact, **characterised in that** the compression means is an inflatable seal (7) located in a groove (18) of said element (3) and comprises a flexible envelope (27) and an inflation orifice, and the flexible envelope comprises two adjacent closed ends in the groove.

2. Gland packing according to claim 1, **characterised in that** the envelope (27) is tubular, and the ends have plane faces (28) and are connected to end contours of the envelope.

3. Gland packing according to claim 2, **characterised in that** the envelope section is prismatic when it is inflated, and the ends have an identical prismatic shape.

4. Gland packing according to claim 3, **characterised in that** the prismatic shape and section are essentially rectangular.

5. Gland packing according to claim 3, **characterised in that** the envelope has one face bearing on the block, on which parallel teeth (23) are formed extending from one end to the other.

6. Gland packing according to claim 1, **characterised in that** the orifice comprises a filling valve (25).

7. Gland packing according to claim 6, **characterised in that** the valve opens into a conduit (31) opening into a fluid volume (14) contained by the packing.

8. Gland packing according to claim 7, **characterised in that** the fluid volume is divided by a flexible membrane (33) into a main volume opening onto slip faces and an ancillary volume opening onto the conduit.

9. Gland packing according to claim 1, **characterised in that** the seal contains a flexible stiffener (38).

10. Gland packing according to claim 6, **characterised in that** the valve opens into a conduit (26) leading to an outer face of the element.
